# EUROPÄISCHE PATENTSCHRIFT

(11) **EP 0 538 277 B1**
(45) Veröffentlichungstag und Bekanntmachung des Hinweises auf die Patenterteilung: **12.10.1994**
(21) Anmeldenummer: 91911003.1
(22) Anmeldetag: 24.06.1991
(51) Int. Cl.: H04B 10/20, H04L 12/44, H04B 1/74

(54) **OPTISCHES DATENNETZ HOHER BETRIEBSSICHERHEIT**
HIGHLY RELIABLE OPTICAL DATA SYSTEM
RESEAU OPTIQUE DE DONNEES A HAUTE FIABILITE DE FONCTIONNEMENT

(30) Priorität: 11.07.1990 DE 4022027
(43) Veröffentlichungstag der Anmeldung: 28.04.1993
(73) Patentinhaber: SIEMENS AKTIENGESELLSCHAFT, 80333 München (DE)
(72) Erfinder: IMHOFF, Andreas, D-8000 München 60 (DE); KELLER, Hendrik, D-8000 München 70 (DE); REIMANN, Udo, D-8000 München 71 (DE); WESSELY, Walter, D-8000 München 80 (DE)
(86) Internationale Anmeldenummer: DE9100514
(87) Internationale Veröffentlichungsnummer: WO9201341

(56) Entgegenhaltungen:
- EP-A- 188 117
- EP-A- 318 332
- WO-A-82/03739

## Beschreibung

Die Erfindung betrifft ein optisches Datennetz hoher Betriebssicherheit nach dem Oberbegriff des Patentanspruches 1.

Bei zukünftigen Datennetzen, wie beispielsweise dem digitalen Fernsprechnetz, werden anstelle der bisherigen metallischen Leitungen Lichtwellenleiter mit den entsprechenden Übertragungseinrichtungen eingesetzt. Ein solches optisches Datennetz ist im British Telecom Technology Journal, Vol.7, Nr.2, April 1989, S.100 - 113 beschrieben. Die Datenübertragung erfolgt in einem passiven optischen Netz (fiber to the home/curb), das physisch einem Baumnetz entspricht und logisch durch ein Sternnetz beschrieben wird. Zur Umsetzung der elektrischen Signale in optische Größen sind neben den elektro-optischen Wandlern zur Durchführung der Übertragungsprozeduren und Formatierung der Daten Steuereinrichtungen notwendig. Diese sind im wesentlichen in einer Zentraleinheit oder Kopfstation untergebracht, die auf der Vermittlungsseite installiert wird und auch die Fehlerüberwachung übernimmt. Die Verzweigung im Baumnetz erfolgt über optische Verzweigungen/Koppler (Splitter). Die Datenübertragung erfolgt stets zwischen den Teilnehmer-Anschlußeinheiten und einer Zentraleinheit, über eine Vermittlungseinrichtung sowie zwischen einer Zentraleinheit und den Teilnehmer-Anschlußeinheiten. In Richtung zum Teilnehmer wird ein Zeitmultiplexverfahren (TDM) und in Richtung zur Zentraleinheit ein adaptives Zeitmultiplexverfahren (TDMA-time division multiple access) eingesetzt. Die Übertragungsrahmen in beiden Richtungen sind prinzipiell gleich aufgebaut. Außerdem ist die Datenrate für jeden Teilnehmer in beiden Richtungen gleich. Damit die Datenpakete von den Teilnehmer-Anschlußeinheiten zur Zentraleinheit übertragen werden können, müssen zunächst die durch die unterschiedlichen Längen der Lichtwellenleiter bedingten unterschiedlichen Laufzeiten zwischen der Zentraleinheit und den Teilnehmer-Anschlußeinheiten ausgeglichen werden.

Dies geschieht durch elektronische Verzögerungseinrichtungen in den Teilnehmer-Anschlußeinheiten, durch die die Summe der Laufzeiten in den Lichtwellenleiter und den Übertragungseinrichtungen für alle Teilnehmer-Anschlußeinheiten auf den gleichen Wert eingestellt wird. Das Einmessen und Einstellen der elektronischen Verzögerungseinrichtungen wird von der Steuereinrichtung der Zentraleinheit (operation and maintenance - O&M) in Zusammenarbeit mit den einzelnen Teilnehmern-Anschlußeinheiten durchgeführt. Die Steuereinrichtung führt Aufgaben wie das Einmessen und Überprüfungen selbständig durch. Andere Aufgaben, wie eine zweiseitige Konfiguration von Datenkanälen mit unterschiedlichen Transferraten zwischen der Zentraleinheit und den Teilnehmern, werden dagegen nur auf Anforderung der Vermittlung durchgeführt. Neben den Datenkanälen gibt es hierzu zusätzliche Steuer- und Überwachungskanäle, hier als O&M-Kanäle bezeichnet, zwischen der Zentraleinheit und den Teilnehmer-Anschlußeinheiten. Die Steuerung und Überwachung erfolgt stets durch die Zentraleinheit.

Die Zentraleinheit ist somit eine unbedingt erforderliche Komponente der gesamten Ubertragungseinrichtung. Ihr Ausfall würde die Verbindung zu einer größeren Gruppe von Teilnehmern unterbrechen.

Aufgabe der Erfindung ist es, ein Datenübertragungsnetz mit hoher Betriebssicherheit anzugeben. Außerdem soll ein störungsfreies Auswechseln der Zentraleinheit möglich sein.

Diese Aufgabe wird durch das im Anspruch 1 angegebene optische Datennetz gelöst.

Die Betriebssicherheit des Datenübertragungssystems wird durch eine oder mehrere Reserve-Zentraleinheiten erheblich vergrößert. Es können auch ebenfalls zwei oder mehrere Spezial-Anschlußeinheiten vorgesehen werden. Um bei Ausfall oder Störung der aktiven Zentraleinheit oder zu Prüfzwecken ein störungsfreies Umschalten auf eine Reserve-Zentraleinheit zu ermöglichen, muß die Reserve-Zentraleinheit nicht nur exakt dieselben Funktionen der bisherigen aktiven Zentraleinheit übernehmen, darüber hinaus müssen auch exakt dieselben Laufzeiten zu und von den Teilnehmer-Anschlußeinheiten bestehen. Dies wird durch verstellbare, elektronische Verzögerungs-Einrichtungen der Zentraleinheiten erreicht.

Vorteilhaft ist auch, wenn die Einstellung der Empfangs-Verzögerungseinrichtung der Reserve-Zentraleinheit durch eine besondere Prozedur über die Spezial-Anschlußeinheit erfolgt. Dies hat den Vorteil, daß eine eindeutige Einstellung erzielt wird, während sonst eine Fehleinstellung auf die Antwortsignale der Teilnehmer-Anschlußeinheiten erfolgen kann, die bereits während des Einmessens ausgesendet werden. Außerdem stört auch das spätere Einmessen neuer Teilnehmer-Anschlußeinheiten nicht mehr.

Vorteilhaft ist, daß die Spezial-Anschlußeinheit außer der üblichen von den empfangenen Daten gesteuerten Takterzeugung mit großer Zeitkonstante einen weiteren steuerbaren Oszillator mit geringer Zeitkonstante aufweist, so daß eine Messung des Phasenunterschiedes zwischen den von der aktiven Zentraleinheit und aer Reserve-Zentraleinheit empfangenen Daten erfolgen kann. Außerdem ist eine Zeitmeßeinrichtung in der Spezial-Anschlußeinheit vorgesehen, die es gestattet, auch Laufzeitunterschiede von mehr als einem Bit zu erfassen. Es kann aber auch gleichzeitig der gesamte Laufzeitunterschied gemessen werden.

Die Phasen- bzw. Laufzeitunterschiede werden von der Spezial-Anschlußeinheit der Reserve-Zentraleinheit codiert mitgeteilt, die ihre Sende-Laufzeitverzögerung entsprechend korrigiert.

Vorteilhaft ist es, wenn die Aufforderung zum Aussenden einer Meßsignalfolge durch die Reserve-Zentraleinheit durch einen Befehl der aktiven Zentraleinheit ausgelöst wird, der bei der Spezial-Anschlußeinheit ein entsprechendes (gleiches) Aufforderungssignal auslöst, durch das die Reserve-Zentraleinheit zur Aussendung des Synchronisiersignals veranlaßt wird. Hierdurch ist eine direkte Verbindung zwischen den Zentraleinheiten nicht erforderlich.

Es ist zur Ausnutzung der Ubertragungskapazität zweckmäßig, wenn auch eine Spezial-Anschlußeinheit die Aufgaben einer üblichen Teilnehmer-Anschlußeinheit miterfüllt, daß an sie also ebenfalls ein oder mehrere Teilnehmer angeschlossen werden kann.

Vorteilhaft für eine weitere Umschaltung auf eine Reserve-Zentraleinheit oder eine Ersatz-Zentraleinheit ist es, wenn die Reserve-Zentraleinheit nach Übernahme der Funktion einer aktiven Zentraleinheit ihre Laufzeit-Verzögerungen auf einen Mittelwert einstellt. Hierdurch kann sich eine Reserve-Zentraleinheit bzw. eine Ersatz-Zentraleinheit auch bei einer geänderten Signalwegführung wieder laufzeitmäßig anpassen, ohne daß die Verzögerungseinrichtungen unnötig umfangreich dimensioniert werden.

Die Erfindung wird anhand von Ausführungsbeispielen näher erläutert.

Es zeigen:
- Fig. 1: die Struktur des erfindungsgemäßen Datenübertragunsnetzes,
- Fig. 2: Blockschaltbilder der Zentraleinheiten, eine Teilnehmeranschlußeinheit und eine Spezialanschlußeinheit,
- Fig. 3: einen Pulsrahmen und
- Fig. 4: einen Pulsrahmen für die Gegenrichtung.

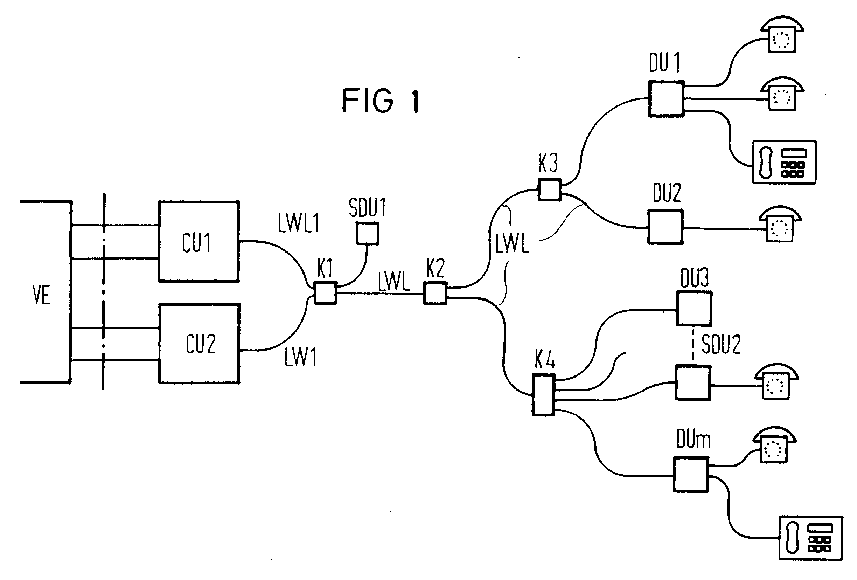

In Figur 1 ist ein Teil des optischen Datennetzes prinzipiell dargestellt. An eine Vermittlungseinrichtung VE ist als Teilnehmeranschlußnetz - vereinfacht durch Lichtwellenleiter LWL mit Kopplern K dargestellt - ein Baumnetz über zwei Zentraleinheiten CU1 und CU2 angeschaltet. Die teilnehmerseitigen Anschlußleitungen der Zentraleinheit, die Lichtwellenleiter LWL1 und LWL2, sind über einen ersten Koppler K1 zusammengefaßt. In jedem Koppler ist das Zusammenfassen und das Aufteilen zweier oder auch mehrerer Lichtwellenleiter möglich. So ist an einen Anschluß des ersten Kopplers K1 über einen Lichtwellenleiter LWL ein zweiter Koppler K2 angeschaltet, von dem über weitere Koppler K3, K4 zu mehreren Teilnehmer-Anschlußeinheiten DU1, DU2, ... (distant units) verzweigt wird. An jede Teilnehmer-Anschlußeinheit können mehrere Endgeräte, beispielsweise Fernsprechapparate oder Datenübertragungsgeräte angeschaltet werden. An einen weiteren Anschluß des ersten Kopplers K1 kann bereits eine Spezial-Anschlußeinheit SDU1 angeschlossen werden. Aus Sicherheitsgründen kann auch noch eine weitere Spezial-Anschlußeinheit SDU2 vorgesehen werden, die ebenfalls an beliebiger Stelle des optischen Netzes angeschlossen sein kann. An die Vermittlungseinheit VE sind in der Regel mehrere optische Baumnetze über eine entsprechende Anzahl von Zentraleinheiten angeschaltet.

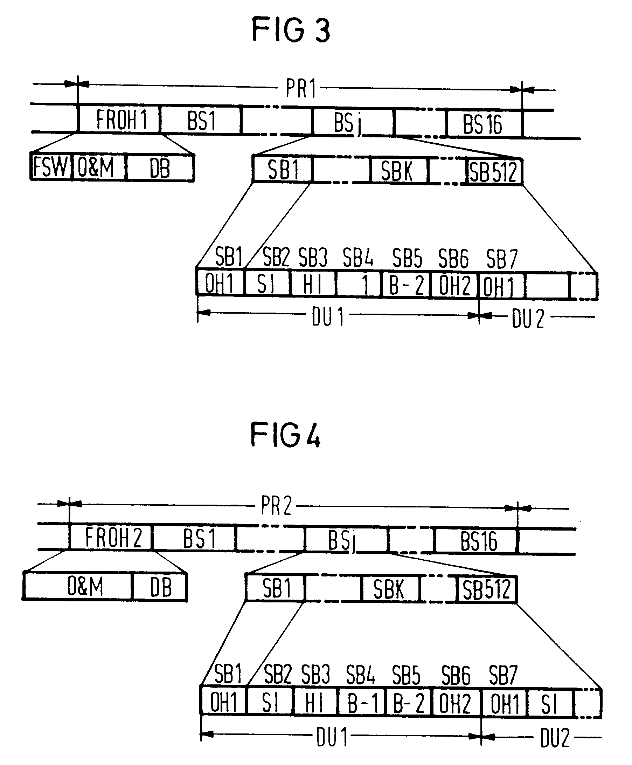

Die Übertragung erfolgt hier in beiden Übertragungsrichtungen auf den Lichtwellenleitern im Wellenlängen-Multiplexbetrieb. Natürlich sind auch getrennte Lichtwellenleiter für die beiden Übertragungsrichtungen möglich. Wie bereits beschrieben, erfolgt die Übertragung zwischen Zentraleinheit und den Teilnehmer-Anschlußschaltungen und ebenso in der Gegenrichtung im Zeitmultiplexbetrieb. Hierfür geeignete Pulsrahmen PR1 und PR2 sind in den Figuren 3 und 4 angegeben, auf die später noch genauer eingegangen wird.

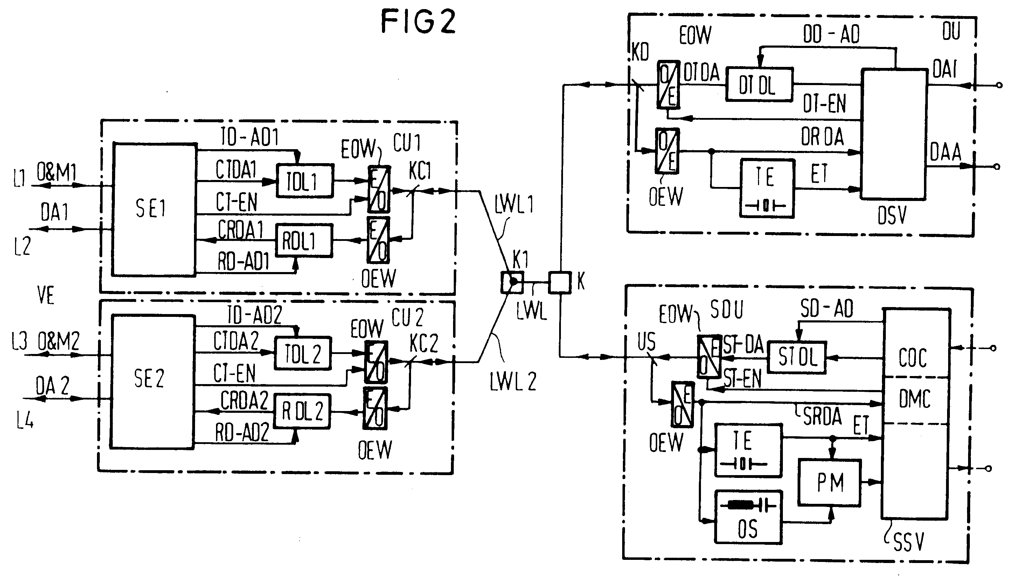

In Figur 2 sind die Zentraleinheiten CU1, CU2 und jeweils eine Teilnehmer-Anschlußeinfleit DU und eine Spezial-Anschlußeinheit SDU in einem Minimalnetz dargestellt. Hier ist die Spezial-Anschlußeinheit SDU und die Teilnehmer-Anschlußeinheit DU über einen gemeinsamen Koppler K an das Teilnehmeranschlußnetz bzw. an den Lichtwellenleiter LWL angeschlossen.

Die erste Zentraleinheit CU1 enthält eine Steuereinheit SE1, die mit der Vermittlungseinrichtung VE über Leitungen L1 und L2 verbunden ist, über die serielle und/oder parallele Nutzdaten DA1 und O&M-Daten O&M1 ausgetauscht werden. Die Steuereinheit ist - soweit dies bei der hohen Datenrate möglich ist - mit Mikroprozessoren realisiert. Da das Datenübertragungsverfahren prinzipiell bekannt ist, bereitet es dem Fachmann auch keinerlei Probleme, eine entsprechende Steuerung zu realisieren. Neu an der Zentraleinheit sind jedoch zwei Verzögerungseinrichtungen TDL1 und RDL1, deren Verzögerungszeit von der Steuereinheit durch Steuersignale TD-AD1 bzw. RD-AD1 eingestellt wird. Über einen elektro-optischen Wandler EOW und einen opto-elektrischen Wandler OEW sind die Verzögerungseinrichtungen über einen internen Wellenlängen-Koppler (wavelength devision multiplexing-WDM) KC1 an den Lichtwellenleiter LWL1 angeschaltet. Die Sendedaten CTDA1 werden von der Steuereinheit über die Sende-Verzögerungseinrichtung TDL1 ausgesendet und die Empfangsdaten CRDA1 über die Empfangs-Verzögerungseinrichtung RDL1 der Steuereinheit SE1 zugeführt. Der elektro-optische Wandler EOW ist durch ein Sende-Aktivierunss-Signal CT-EN abschaltbar.

Die zweite Zentraleinheit CU2 ist identisch ausgeführt und über weiteren Leitungen L3 und L4 mit der Vermittlungseinrichtung VE verbunden. Die einander entsprechenden Baugruppen und Signale sind, soweit notwendig, mit der Kennzeichung 2 versehen.

Die aktive Zentraleinheit CU1 organisiert als Master die Durchführung des Multiplexbetriebes zwischen ihr und den Anschlußeinheiten DU und SDU. Sie sorgt auch für eine entsprechende Umsetzung der Datenformate und übernimmt den Datenverkehr mit der Vermittlungseinrichtung VE sowohl für Nutzdaten als auch für O&M-Daten.

Bei der dargestellten Teilnehmer-Anschlußeinrichtung DU sorgt ein zugeordneter Wellenlängen-Koppler KD für die Einspeisung bzw. die Aufteilung der Signale in Sende- und Empfangsrichtung. Ein opto-elektrischer Wandler OEW setzt die empfangenen optischen Signale in elektrische Datensignale DRDA um, die einer Takterzeugung TE und einer Steuerung DSV zugeführt werden. Diese enthält wiederum alle Schaltungen, die zur Durchführung des TDM/TDMA-Betriebes notwendig sind und Umsetzereinrichtungen, die die empfangenen Daten in kontinuierliche Datenströme umwandeln und ebenso die kontinuierlichen Daten der Endeinrichtungen in Datenpakete umsetzen und in den Pulsrahmen einfügen.

Von der Steuerung DSV werden die Sendedaten DTDA über eine Sende-Verzögerungseinrichtung DTDL, einen elektro-optischen Wandler EOW und den Wellenlängen-Koppler KD ausgesendet. Die Sende-Verzögerungseinrichtung DTDL wird durch Steuersignale DD-AD der Zentraleinheit gesteuert.

Die Hauptaufgabe der Teilnehmer-Anschlußeinheit ist die Umsetzung der in Form von Paketen empfangenen Daten DRDA in geeignete Ausgangsdaten DAA und ebenso die Umsetzung der Eingangsdaten DAI in Datenpakete und deren Übertragung zur Zentraleinheit. Es können sowohl parallele als auch serielle Daten der Endgeräte verarbeitet werden. Die Steuerung DSV muß daher ebenso wie die Steuereinheit SE einer Zentraleinheit über die geeigneten Zwischenspeicher und Umsetzer verfügen. Wegen einer besseren Übersichtlichkeit wurde stets auf die Darstellung von Codierern und Decodierern (beispielsweise CMI) für die Übertragung der optischen Signale verzichtet. Die Takterzeugung TE gewinnt aus den empfangenen Daten DRDA ein kontinuierliches Empfangstaktsignal ET.

Die Spezial-Anschlußanheit SDU enthält - wie die Teilnehmer-Anschlußeinheit - neben einem Wellenlängen-Koppler KS, einem opto-elektronischen Wandler OEW und einem elektro-optischen Wandler EOW, eine spezielle Steuerung SSV. Die empfangenen Daten SRDA werden dieser speziellen Steuerung SSV zugeführt, die ihrerseits Sendedaten STDA über eine Verzögerungseinrichtung STDL abgibt. Außer der Takterzeugung TE, die - wie auch die Takterzeugung einer Teilnehmer-Anschlußeinheit - eine sehr große Zeitkonstante aufweist, ist eine Meßeinrichtung vorgesehen, mit der der Laufzeitunterschied der Sendesignale CTDA1 und CTDA2 der beiden Zentraleinheiten CU1 und CU2 festgestellt werden kann. In diesem Ausführungsbeispiel ist hierzu ein steuerbarer Oszillator OS, beispielsweise durch einen LC-Schwingkreis realisiert, mit kleiner Zeitkonstante vorgesehen, dessen Ausgang wie auch der Ausgang der Takterzeugung einer Phasenmeßeinrichtung PM zugeführt ist. Außerdem ist noch eine in der speziellen Steuerung SSV enthaltene Differenz-Meßeinrichtung DMC vorhanden.

Darüber hinaus kann die Spezial-Anschlußeinheit spezielle Anforderungssignale erkennen und ebenfalls Anforderungs- und Korrektursignale aussenden.

Die Spezialeinheit kann so ausgeführt werden, daß sie auch alle Funktionen der Teilnehmer-Anschlußeinheit erfüllen kann.

Beide Zentraleinheiten CU1 und CU2 erhalten von der Vermittlung dieselben Daten, Synchron- und Taktsignale. Im allgemeinen sind für die unterschiedlichen Daten und Richtungen verschiedene Leitungen L1 bis L4 vorgesehen. Der Vermittlungseinrichtung werden jedoch nur die Daten DA1 und O&M1 von der aktiven Zentraleinheit zugeführt. Gesteuert von der Vermittlungseinrichtung VE und der Steuereinheit SE1 der aktiven Zentraleinheit CU1 werden zunächst die Teilnehmer-Anschlußeinheiten DU und die Spezial-Anschlußeinheit SDU bzw. Anschlußeinheiten SDU1 und SDU2 eingemessen, d.h. ihre Verzögerungseinrichtungen DTDL bzw. STDL werden so eingestellt, daß die gesamte Laufzeit zwischen Aussenden eines entsprechenden Signals, beispielsweise eines Rahmenkennungswortes, von der Zentraleinheit und dem Empfang des Antwortsignals einer Anschlußeinheit eine konstante Zeitdauer (beispielsweise 100 µs) beträgt. Die Verzögerungseinrichtungen TDL1 und RDL1 der aktiven Zentraleinheit CU1 stehen hierbei auf einem Mittelwert. Die zum Einmessen notwendigen Befehle zum Einstellen der Sende-Verzögerungseinrichtungen DTDL und STDL der Teilnehmer- und der Spezial-Anschlußeinheiten und deren Antwortsignale werden während der Rahmen-Informationsteile FROH1 bzw. FROH2 der Pulsrahmen übertragen.

Als Verzögerungseinrichtungen können sowohl analoge als auch digitale Verzögerungsleitungen eingesetzt werden. Verzögerungen, die über eine Bitdauer auf der Übertragungsstrecke hinausgehen, können auch durch die Steuereinheit oder durch Schieberegister realisiert werden.

Nach dem "Einmessen" werden den Teilnehmer-Anschlußeinheiten und der Spezial-Anschlußeinheit bestimmte Zeitschlitze der Pulsrahmen PR1, PR2 zugeordnet, über die außer den Nutzdaten auch vermittlungsspezifische Information übertragen wird. Es ist selbstverständlich, daß die Anschlußeinheiten so gesteuert werden, daß sich deren Sendesignale nicht überlagern.

Bevor auf die Funktion der Spezial-Anschlußeinheit und weitere Details eingegangen wird, sollen zunächst die im Ausführungsbeispiel verwendete Pulsrahmen näher erläutert werden.

In Figur 3 ist der Pulsrahmen PR1 für die Übertragungsrichtung von einer Zentraleinheit zu den Teilnehmer-Anschlußeinheiten dargestellt. Im Rahmeninformationsteil (frame overhead) FROH1 wird ein Rahmenkennungswort FSW (frame start word) und O&M-Information (beispielsweise in 64 O&M-Kanäle aufgeteilt) übertragen. Der Rahmeninformationsteil wird durch Leerbits DB (dummy-bits) auf den Umfang eines der folgenden Basisblöcke aufgefüllt. Anschließend werden 16 Basisblöcke BB1 bis BB16 mit je 4096 Bits übertragen, von denen jeder in gleicher Weise in Unterblöcke SB1 bis SB512 aufgeteilt ist. Jeder Unterblock weist 8 Bits auf, so daß er bei einer Rahmenwiederholfrequenz von 500 Hz einen B-Kanal mit einer Transferrate von 8 bit x 16 x 500 l/s = 64 kbit/s realisiert.

Bei dem in Figur 3 dargestellten Beispiel werden zur ersten Teilnehmer-Anschlußeinheit DU1 zwei dieser B-Kanäle, dies entspricht der Nutzinformation eines ISDN-Basisanschlusses, übertragen. Insgesamt werden hierzu 6 Unterblöcke SB1 bis SB6 verwendet. SI und HI beinhalten Vermittlungsinformation. OH1 und OH2 können zur Übertragung von Information zu Organisationszwecken genutzt werden und B-1 und B-2 beinhalten die Nutzinformation. Auf weitere Einzelheiten soll hier nicht weiter eingegangen werden, da sie nicht Bestandteil der Erfindung sind.

Der Pulsrahmen PR2 nach Fig. 4 für die Gegenrichtung ist im Prinzip gleich aufgebaut. Der Rahmen-Informationsteil FROH2 dient wieder zur Übertragung der O&M-Kanäle. Es schließen sich wieder Leerbits DB an. Anschließend folgen wieder 16 Basisblöcke BB1 bis BB16. In der Gegenrichtung steht wiederum die gleiche Übertragungskapazität - zwei 64 kbit/s-Kanäle für die erste Teilnehmer-Anschlußeinheit DU1 - zur Verfügung.

Um ein störungsfreies Umschalten zwischen den Zentraleinheiten im Störungs- oder Testfall zu gewährleisten, müssen nun zunächst die durch unterschiedliche Längen der Lichtwellenleiter LWL1 und LWL2 sowie Bauteiletoleranzen bedingte Laufzeitunterschiede von den Anschlußeinheiten DU, SDU zu beiden Zentraleinheiten CU1, CU2 ausgeglichen werden.

Durch das Übertragungsprinzip bedingt, erfolgt in den Zentraleinheiten die Verarbeitung von auszusendenden und empfangenen Daten mit demselben Taktsignal. Ebenso liegen die Pulsrahmen in beiden Übertragungsrichtungen phasenstarr zueinander.

Die Reserve-Zentraleinheit CU2 könnte sich, da sie dieselben Takte und Signale wie die aktive Zentraleinheit erhält, bereits laufzeitmäßig durch Verstellen ihrer Empfangsverzögerung RDL2 angleichen, und hierdurch die Bauteiletoleranzen und Laufzeittoleranzen zwischen dem Lichtwellenleiter LW1 und LW2 ausgleichen. Dies ist jedoch mit einigen bereits vorstehend beschriebenen Nachteilen behaftet.

Zum Abgleich der Laufzeitunterschiede von den Anschlußeinheiten zu den Zentraleinheiten CU1 und CU2 kann jedoch auch ein anderes Verfahren angewendet werden. Hierzu wird die Spezial-Anschlußeinheit SDU verwendet, die zunächst wie die Teilnehmer-Anschlußeinheit eingemessen wurde. Über einen Befehl in einem O&M-Kanal wird die Spezial-Anschlußeinheit von der aktiven Zentraleinheit CU1 veranlaßt, eine festgelegte Bitfolge, als Synchronisierfolge bezeichnet, auszusenden. Die Reserve-Zentraleinheit untersucht während eines Empfangsfensters oder ständig den ankommenden Datenstrom, erkennt die Synchronfolge und vergleicht den Zeitpunkt ihres Eintreffens mit dem Erwartungszeitpunkt. Sie verstellt ihre Empfangs-Verzögerungseinrichtung bis die Differenz Null ist.

Der Einstellwert für die Empfangs-Verzögerungseinrichtung wird auch als Schätzwert für die Sende-Verzögerungseinrichtung TDL2 verwendet. Aufgrund der Bauteiltoleranzen und der unterschiedlichen Signallaufzeiten in beiden Richtungen muß aber noch ein exakter Abgleich der Laufzeiten von den Zentraleinheiten zur Spezial-Anschlußeinheit und damit auch zu allen anderen Teilnehmer-Anschlußeinheiten erfolgen. Hierzu wird von der Reserve-Zentraleinheit eine Meßsignalfolge ausgesendet.

Die Laufzeit der Sende-Verzögerungseinrichtung STDL in der Spezial-Anschlußeinheit wurde bereits durch die aktive Zentraleinheit CU1 während des Einmessens exakt eingestellt. Durch deren Sendedaten CTDA1 wird auch die Takterzeugung TE der Spezial-Anschlußeinheit gesteuert oder geregelt. Die Takterzeugung TE weist - wie bereits erwähnt - eine hohe Zeitkonstante auf und kann beispielsweise durch einen Phasenregelkreis mit Quarz-Oszillator realisiert werden. Die notwendigen Schritte zur Aussendung einer Meßsignalfolge der Reserve-Zentraleinheit können von der aktiven Zentraleinheit CU1 eingeleitet werden. Über einen O&M-Kanal wird ein Anforderungssignal an die Spezial-Anschlußeinheit SDU gesendet. Diese wertet den Inhalt aus und überträgt ihn als Echo sofort wieder über einen O&M-Rückkanal, dessen Information auch von der Reserve-Zentraleinheit CU2 empfangen wird. Die aktive Zentraleinheit CU1 sperrt beispielsweise zu Beginn eines festgelegten O&M-Zeitschlitzes oder des Rahmeninformationsteils FROH kurzfristig die eigene Aussendung durch Abschaltung des eigenen Lasers und ermöglicht so der Reserve-Zentraleinheit CU2 nach kurzer Pause zunächst eine Anzahl von Synchronisierbits und anschließend die eigentliche Meßsignalfolge auszusenden, die von der Spezial-Anschlußeinheit ausgewertet wird. Das Feststellen des Laufzeitunterschiedes zwischen den Daten beispielsweise des Rahmenkennungswortes, der aktiven Zentraleinheit CU1 und der Meßsignalfolge erfolgt in einer Meßeinrichtung. Hier mit Hilfe des steuerbaren Oszillators OS, der - wie erwähnt - eine kurze Zeitkonstante aufweist. Eine Phasenmeßeinrichtung PM stellt den Phasenunterschied zwischen den empfangenen Daten der aktiven Zentraleinheit CU1 und der Meßsignalfolge der Reserve-Zentraleinheit CU2 fest. Die Differenzmeßschaltung DMC wertet darüber hinaus die empfangene Meßsignalfolge aus und kann somit auch Laufzeitunterschiede von mehr als einem Bit feststellen.

Ebenso ist auch die direkte Messung der gesamten Laufzeitdifferenz bei entsprechendem Schaltungsaufwand möglich.

Die Laufzeitdifferenz oder ein hieraus abgeleitetes Signal wird von der Codierschaltung COC umgesetzt und über den zugeordneten O&M-Rückkanal als Korrektursignal zur Reserve-Zentraleinheit CU2 übertragen, die daraufhin ihre Sende-Verzögerungseinrichtung TDL2 verstellt, bis die Signallaufzeiten von beiden Zentraleinheiten CU1 und CU2 zur Spezial-Anschlußeinheit SDU exakt gleich sind, also auch kein Phasenunterschied zwischen den Empfangssignalen bei der Spezial- Anschlußeinheit mehr auftritt.

Die Verstellung der Sende-Verzögerungseinrichtung kann - wie auch die der Empfangs-Verzögerungseinrichtung - in kleinen Schritten erfolgen. Nach -jeder Aussendung der Synchronisierfolge durch die Reserve-Zentraleinheit CU2 schaltet diese ihren Laser wieder aus und die aktive Zentraleinheit CU1 sendet weiter. Durch die hohe Zeitkonstante der Takterzeugungen in den weiteren Teilnehmer-Anschlußeinheiten hat sich deren Takt praktisch nicht geändert, so daß die folgenden Datenbits störungsfrei empfangen werden können.

Die Aussendung der Anforderungssignale, der Synchronisier- und der Meßsignalfolgen erfolgt - abhängig vom Aufbau des Pulsrahmens - während des Rahmen-Informationsteils (frame overhead) anstelle der O&M-Information oder anstelle der Leerbits. Zur Übertragung der Synchronisierfolge können auch mehrere oder sämtliche O&M-Kanäle vorgesehen sein, wobei dann natürlich die weiteren Anschlußeinheiten sendeseitig gesperrt werden.

Wenn sowohl die Laufzeiten beider Zentraleinheiten zu den Anschlußeinheiten und in der Rückrichtung exakt gleich sind, kann ohne Störungen auf die Reserve-Zentraleinheit CU2 umgeschaltet werden. Gleichzeitig müssen auch die Signale DA2, O&M2 von der zweiten Steuereinheit SE2 anstelle der Signale DA1, O&M1 von der Steuereinheit SE1 an die Vermittlung durchgeschaltet werden. Dies kann durch synchrones Umschalten von der Vermittlung bzw. einer Überwachungseinrichtung gesteuert erfolgen und zu Testzwecken auch manuell ausgelöst werden. Die Umschaltung erfolgt zweckmäßigerweise zu Beginn eines Pulsrahmens oder nach dem O&M-Teil, wenn zwischen der aktiven Zentraleinheit und den Anschlußeinheiten keine relevanten Daten übertragen werden.

Anschließend arbeitet die Reserve-Zentraleinheit CU2 als aktive Zentraleinheit. Die Verzögerungszeiten der Sende- und Empfangs-Verzögerungseinrichtung können langsam auf den Mittelwert gestellt werden, so daß nach Ersatz der defekten Zentraleinheit durch eine neue, diese sich wieder laufzeitmäßig anpassen kann.

Diese Option ist nur dann notwendig, wenn durch eine neue Wegeführung sich die Laufzeiten auf den Lichtwellenleitern stark ändern.

Natürlich können zur Erhöhung der Sicherheit auch zwei oder mehrere Spezial-Anschlußeinheiten vorgesehen werden. Von denen wird jeweils nur eine durch einen Befehl als Spezial-Anschlußeinheit aktiv geschaltet, während die zweite oder weitere als Teilnehmer-Anschlußeinheit ihren Dienst tuen.

## Patentansprüche

1. Optisches Datennetz hoher Betriebssicherheit mit einer zwischen einer Vermittlungseinrichtung und einem optischen Teilnehmeranschlußnetz eingeschalteten Zentraleinheit (CU1) und mehreren über Lichtwellenleiter und Kopplern angeschalteten Teilnehmer-Anschlußeinheiten (DU1, DU2, DU3,...), die im Zeitmultiplexverfahren jeweils über die Zentraleinheit (CU1) Daten übertragen oder austauschen,
**dadurch gekennzeichnet**,
daß zur aktiven Zentraleinheit (CU1) mindestens eine Reserve-Zentraleinheit (CU2) funktionsmäßig parallel geschaltet ist, wobei die Zentraleinheiten (CU1, CU2) über Lichtwellenleiter (LWL1, LWL2) an das Teilnehmeranschlußnetz (LWL) angeschaltet sind,
daß die Zentraleinheiten (CU1,CU2) jeweils eine steuerbare Sende-Verzögerungseinrichtung (TDL1, TDL2) im Sendeweg und jeweils eine steuerbare Empfangs-Verzögerungseinrichtung (RDL1, RDL2) im Empfangsweg aufweisen, wobei die Empfangs-Verzögerungseinrichtung (RDL2) der Reserve-Zentraleinheit (CU2) durch empfangene Signale eingestellt wird,
daß mindestens eine an das Teilnehmeranschlußnetz angeschaltete Spezial-Anschlußeinheit (SDU) vorgesehen ist, die im Sendeweg eine steuerbare Verzögerungseinrichtung (STDL) aufweist,
daß die Spezial-Anschlußeinheit (SDU) im Empfangsweg eine Meßeinrichtung (PM, DMC) zum Feststellen des Laufzeitunterschiedes von Sendesignalen (CTDA1, CTDA2) der aktiven Zentraleinheit (CU1) und der Reserve-Zentraleinheit (CU2) aufweist,
daß die Spezial-Anschlußeinheit (SDU) ein Korrektursignal aussendet,
durch das die Sende-Verzögerungseinrichtung (TDL2) der Reserve-Zentraleinheit (CU2) gesteuert wird, bis die Laufzeiten für die Sendesignale (CTDA1, CTDA2) beider Zentraleinheiten gleich sind.

2. Optisches Datennetz nach Anspruch 1,
**dadurch gekennzeichnet**,
daß die Spezial-Anschlußeinheit (SDU) eine Synchronisierfolge aussendet, mit der die Empfangs-Verzögerungseinrichtung (RDL2) der Reserve-Zentraleinheit (CU2) eingestellt wird.

3. Optisches Datennetz nach Anspruch 1 oder 2,
**dadurch gekennzeichnet**,
daß die Verzögerungszeit der Empfangs-Verzögerungseinrichtung (RDL2) zunächst ebenfalls bei der Sende-Verzögerungseinrichtung (TDL2) der Reserve-Zentraleinheit (CU2) eingestellt wird.

4. Optisches Datennetz nach einem der vorhergehenden Ansprüche,
**dadurch gekennzeichnet**,
daß die Reserve-Zentraleinheit (CU2) eine Meßsignalfolge aussendet, deren Laufzeitunterschied zu den von der aktiven Zentraleinheit (CU1) gesendeten Daten (CTDA1) von der Spezial-Anschlußeinheit (SDU) ausgewertet und als Korrektursignal zur Einstellung der Sende-Verzögerungseinrichtung (TDL2) gesendet wird.

5. Optisches Datennetz nach Anspruch 4,
**dadurch gekennzeichnet**,
daß von der aktiven Zentraleinheit (CU1) ein Anforderungssignal an die Spezial-Anschlußeinheit (SDU) gesendet wird und daß daraufhin die Spezial-Anschlußeinheit (SDU) ein weiters Anforderungssignal zur Aussendung einer Meßsignalfolge durch die Reserve-Zentraleinheit (CU2) aussendet.

6. Optisches Datennetz nach einem der vorhergehenden Ansprüche,
**dadurch gekennzeichnet**,
daß die Spezial-Anschlußeinheit (SDU) eine vom Empfangssignal (SRDA) gesteuerte Takterzeugung (TE) mit hoher Zeitkonstante und einen gesteuerten Oszillator (OS) mit geringer Zeitkonstante aufweist und daß eine Phasenmeßeinrichtung (PM) an die Ausgänge der Takterzeugung (TE) und des Oszillators (OS) angeschlossen ist.

7. Optisches Datennetz nach einem der vorhergehenden Ansprüche,
**dadurch gekennzeichnet**,
daß in der Spezial-Anschlußeinheit (SDU) auch sämtliche Funktionen einer Teilnehmer-Anschlußeinheit (DU) realisiert sind.

8. Optisches Datennetz nach einem der vorhergehenden Ansprüche,
**dadurch gekennzeichnet**,
daß nach einer Übernahme der Funktion als aktive Zentraleinheit durch die bisherige Reserve-Zentraleinheit (CU2) die Laufzeiten der Sende-Verzögerungseinrichtung (TDL2) und der Empfangs-Verzögerungseinrichtung (RDL2) auf einen mittleren Wert eingestellt werden.

9. Optisches Datennetz nach einem der vorhergehenden Ansprüche,
**dadurch gekennzeichnet**,
daß Sende- und Empfangssignale (CTDA1, CRDA1) im Wellenlängenmultiplexverfahren übertragen werden und
daß die Zentraleinheiten (CU1, CU2), die Teilnehmer-Anschlußeinheiten (DU1, DU2, DU3,...), sowie die Spezial-Anschlußeinheit (SDU) über elektro-optische Wandler (EOW) und optoelektrische Wandler (GEW) und Wellenlängen-Koppler (KC1, KC2, KD, KS) an das Teilnehmeranschlußnetz (LWL) angeschaltet sind.

## Claims

1. Highly reliable optical data network having a central unit (CU1) connected between a switching device and an optical subscriber line network and a plurality of subscriber line units (DU1, DU2, DU3, ...) connected via optical waveguides and couplers which transmit or exchange data in each case via the central unit (CU1) using the time-division multiplexing method, characterized in that at least one back-up central unit (CU2) is connected functionally in parallel with the active central unit (CU1), the central units (CU1, CU2) being connected to the subscriber line network (LWL) via optical waveguides (LWL1, LWL2), in that the central units (CU1, CU2) have in each case a controllable transmission delay device (TDL1, TDL2) in the transmission path and in each case a controllable reception delay device (RDL1, RDL2) in the reception path, the reception delay device (RDL2) of the back-up central unit (CU2) being set by received signals, in that at least one special line unit (SDU) connected to the subscriber line network is provided, which special line unit has a controllable delay device (STDL) in the transmission path, in that the special line unit (SDU) has in the reception path a measuring device (PM, DMC) for determining the delay difference from send signals (CTDA1, CTDA2) of the active central unit (CU1) and of the backup central unit (CU2), and in that the special line unit (SDU) transmits a correction signal, by means of which the transmission delay device (TDL2) of the back-up central unit (CU2) is controlled until the delays for the send signals (CTDA1, CTDA2) of both central units are the same.

2. Optical data network according to Claim 1, characterized in that the special line unit (SDU) transmits a synchronization sequence with which the reception delay device (RDL2) of the back-up central unit (CU2) is set.

3. Optical data network according to Claim 1 or 2, characterized in that the delay time of the reception delay device (RDL2) is initially set likewise in the transmission delay device (TDL2) of the back-up central unit (CU2).

4. Optical data network according to one of the preceding claims, characterized in that the back-up central unit (CU2) transmits a test signal sequence, the delay difference of which to the data (CTDA1) transmitted by the active central unit (CU1) is evaluated by the special line unit (SDU) and is sent as a correction signal to set the transmission delay device (TDL2).

5. Optical data network according to Claim 4, characterized in that a request signal is sent to the special line unit (SDU) by the active central unit (CU1), and in that the special line unit (SDU) thereupon transmits a further request signal for transmission of a test signal sequence by the back-up central unit (CU2).

6. Optical data network according to one of the preceding claims, characterized in that the special line unit (SDU) has a clock generator (STE) controlled by the receive signal (SRDA) with a high time constant and a controlled oscillator (OS) with a low time constant, and in that a phase measuring device (PM) is connected to the outputs of the clock generator (TE) and of the oscillator (OS).

7. Optical data network according to one of the preceding claims, characterized in that all the functions of a subscriber line unit (DU) are also realized in the special line unit (SDU).

8. Optical data network according to one of the preceding claims, characterized in that after the hither- to back-up central unit (CU2) assumes the function of active central unit, the delays of the transmission delay device (TDS2) and of the reception delay device (RDL2) are set to a mean value.

9. Optical data network according to one of the preceding claims, characterized in that send and receive signals (CTDA1, CRDA1) are transmitted using the wavelength-division multiplexing method, and in that the central units (CU1, CU2), the subscriber line units (DU1, DU2, DU3, ...) and also the special line unit (SDU) are connected to the subscriber line network (LWL) via electrooptical transducers (EOW) and optoelectronic transducers (OEW) and wavelength couplers (KC1, KC2, KD, KS).

## Revendications

1. Réseau optique de transmission de données à haute sécurité de fonctionnement, comportant une unité centrale (CU1) montée entre un dispositif de commutation et un réseau optique de raccordement d'abonné, et plusieurs unités (DU1,DU2,DU3,...) de raccordement d'abonné, qui sont raccordées par l'intermédiaire de guides d'ondes lumineuses et de coupleurs et transmettent ou échangent des données selon le procédé de multiplexage temporel, chacun par l'intermédiaire de l'unité centrale (CU1),
caractérisé par le fait
qu'au moins une unité (CU2) centrale de réserve est branchée en parallèle, du point de vue fonctionnel, à l'unité centrale active (CU1), les unités centrales (CU1,CU2) étant raccordées par l'intermédiaire de guides (LWL1,LWL2) d'ondes lumineuses au réseau (LWL) de raccordement d'abonnés,
les unités centrales (CU1,CU2) comportent respectivement un dispositif (TDL1, TDL2) commandable de retardement d'émission situé dans la voie d'émission et respectivement un dispositif (RDL1, RDL2) commandable de retardement de réception situé dans la voie de réception, le dispositif (RDL2) de retardement de réception de l'unité (CU2) centrale de réserve étant réglé par des signaux reçus,
il est prévu au moins une unité (SDU) spéciale de raccordement qui est raccordée au réseau de raccordement d'abonnés et qui comporte, dans la voie d'émission, un dispositif (STDL) commandable de retardement,
I'unité (SDU) spéciale de raccordement située dans la voie de réception comporte un dispositif (PM,DMC) de mesure servant à déterminer la différence de temps de propagation de signaux (CTDA1, CTDA2) d'émission de l'unité (CU1) centrale active et de l'unité (CU2) centrale de réserve, et
l'unité (SDU) spéciale de raccordement émet un signal de correction,
au moyen duquel le dispositif (TDL2) de retardement d'émission de l'unité (CU2) centrale de réserve est commandé jusqu'à ce que les temps de propagation pour les signaux (CTDA1, CTDA2) d'émission des deux unités centrales soient identiques.

2. Réseau optique de transmission de données suivant la revendication 1, caractérisé par le fait que l'unité (SDU) spéciale de raccordement émet un train de synchronisation, au moyen duquel est réglé le dispositif (RDL2) de retardement de réception de l'unité (CU2) centrale de réserve.

3. Réseau optique de transmission de données suivant la revendication 1 ou 2, caractérisé par le fait que le retard du dispositif (RDL2) de retardement de réception est réglé tout d'abord également dans le dispositif (TDL2) de retardement d'émission de l'unité (CU2) centrale de réserve.

4. Réseau optique de transmission de données suivant l'une des revendications précédentes, caractérisé par le fait que l'unité (CU2) centrale de réserve émet un train de signaux de mesure, dont la différence de temps de propagation par rapport aux données (CTDA1) émises par l'unité centrale active (CU1), est exploitée par l'unité (SDU) spéciale de raccordement et est envoyée en tant que signal de correction pour le réglage du dispositif (TDL2) de retardement d'émission.

5. Réseau optique de transmission de données suivant la revendication 4, caractérisé par le fait qu'un signal de demande est envoyé par l'unité centrale active (CU1) à l'unité (SDU) spéciale de raccordement et qu'ensuite, I'unité (SDU) spéciale de raccordement envoie un autre signal de demande pour l'émission d'un train de signaux de mesure par l'unité (CU2) centrale de réserve.

6. Réseau optique de transmission de données suivant l'une des revendications précédentes, caractérisé par le fait que l'unité (SDU) spéciale de raccordement comporte une unité (TE) de production de cadence, qui est commandée par le signal (SRDA) de réception et a une constante de temps grande, et un oscillateur commandé (OS) ayant une constante de temps petite, et un dispositif (PM) de mesure de la phase est raccordé aux sorties de l'unité (TE) de production de cadence et de l'oscillateur (OS).

7. Réseau optique de transmission de données suivant l'une des revendications précédentes, caractérisé par le fait que également toutes les fonctions d'une unité (DU) de raccordement d'abonné sont réalisées dans l'unité (SDU) spéciale de raccordement.

8. Réseau optique de transmission de données suivant l'une des revendications précédentes, caractérisé par le fait qu'après une prise en charge du rôle d'unité centrale active par l'unité centrale (CU2) qui était jusqu'alors l'unité centrale de réserve, les temps de propagation dans le dispositif (TDL2) de retardement d'émission et dans le dispositif (RDL2) de retardement de réception sont réglés sur une valeur moyenne.

9. Réseau optique de transmission de données suivant l'une des revendications précédentes, caractérisé par le fait
que des signaux d'émission et de réception (CTDA1, CRDA1) sont transmis selon le procédé de multiplexage des longueurs d'onde, et
les unités centrales (CU1,CU2), les unités de raccordement d'abonné (DU1,DU2,DU3,...) ainsi que l'unité (SDU) spéciale de raccordement sont raccordées, par l'intermédiaire de transducteurs électro-optiques (EOW) et de transducteurs opto-électriques (OEW) et de coupleurs en longueurs d'onde (KC1,KC2,KD,KS) au réseau (LWL) de raccordement d'abonné.
